# EUROPÄISCHE PATENTSCHRIFT

(11) **EP 0 473 979 B1**
(45) Veröffentlichungstag und Bekanntmachung des Hinweises auf die Patenterteilung: **28.06.1995**
(21) Anmeldenummer: 91113541.6
(22) Anmeldetag: 13.08.1991
(51) Int. Cl.: B60T 7/08, B60T 13/74

(54) **Servounterstützte Feststellbremse**
Boosted parking brake
Frein de stationnement renforcé

(30) Priorität: 01.09.1990 DE 4027810
(43) Veröffentlichungstag der Anmeldung: 11.03.1992
(73) Patentinhaber: ROBERT BOSCH GMBH, 70442 Stuttgart (DE)
(72) Erfinder: Ursel, Eckhard, Ing. grad., W-7580 Buehl (DE); Schaper, Uwe, W-7580 Buehl-Vimbuch (DE)

(56) Entgegenhaltungen:
- EP-A- 0 411 328
- WO-A-90/15734
- DE-A- 2 815 018
- DE-A- 3 210 402
- DE-A- 3 238 196

## Beschreibung

### Stand der Technik

Die Erfindung bezieht sich auf eine servounterstützte Feststellbremse nach der Gattung des Hauptanspruchs.

Eine derartige Feststellbremse ist bekannt (DE-A-28 15 018). Diese weist einen Handbremshebel auf, der ständig in kraftschlüssigem Eingriff mit der Mitnehmerplatte steht. Außerdem ist dort eine von einem Elektromotor über eine Schnecke und ein Schneckenrad antreibbare Trommel vorgesehen. Die Trommel ist gleichachsig zu der Schwenkachse von Handbremshebel und Mitnehmerplatte gelagert; sie trägt umfangsseitig eine Schlingfeder. Diese steht mit der Mitnehmerplatte in Eingriff. Durch Betätigen des Handbremshebels ist die Schlingfeder in Reibschluß mit der angetriebenen Trommel bringbar, so daß nur zusätzlich zu der Handkraft eine Servokraft auf die Mitnehmerplatte übertragen werden kann. Bei Motorausfall ist eine mittels Handkraft ausgelöste Bremsung möglich. Eine Bremsbetätigung nur mit dem Elektromotor kann bei dieser bekannten Ausführungsform nicht erzeugt werden.

### Vorteile der Erfindung

Die erfindungsgemäße servounterstützte Feststellbremse hat demgegenüber den Vorteil, daß im Automatikbetrieb bei intakter Einrichtung das Anfahren am Berg erleichtert ist, weil ein Einhandlenken unnötig ist. Außerdem braucht beim Parken des Wagens die Feststellbremse nur noch angetippt, aber nicht mehr voll betätigt werden. Das Wegrollen des Fahrzeugs wird auf jeden Fall verhindert. Schließlich ist durch die Automatik ein Überspannen der Bremsseile mit Sicherheit vermieden. Das Umstellen der Feststellbremse von Automatikbetrieb auf mechanischen Hilfsbetrieb ist auf einfache Weise durch Änderung der Stellung der Schwenkplatte möglich.

### Zeichnung

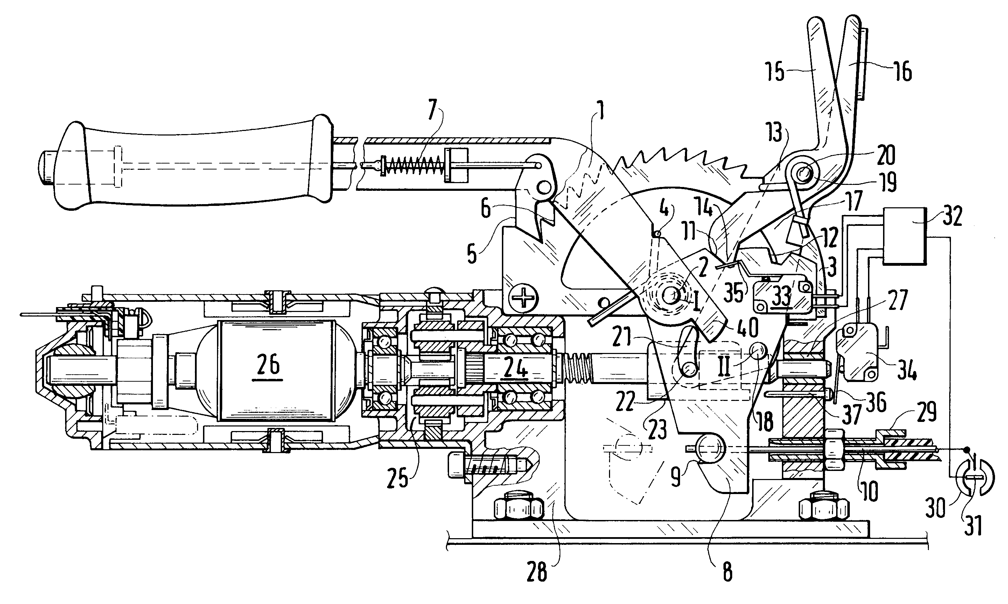

Ein Ausführungsbeispiel der Erfindung ist in der Zeichnung dargestellt und in der nachfolgenden Beschreibung näher erläutert.

### Beschreibung des Ausführungsbeispiels

Eine Feststellbremse hat zu ihrer Betätigung einen Handbremshebel 1, der über ein mehrteiliges Gestänge 8, 13, 17 auf einen Seilzug 10 einwirken kann, der mit einer Radbremse 30 verbunden ist. Außerdem ist ein Elektromotor 26 vorgesehen, mit dem eine Servokraft in den Seilzug 10 einleitbar ist.

Der Handbremshebel 1 ist mittels Bolzen 2 an einer Rastplatte 3 schwenkbar gelagert und mittels einer an der Rastplatte 3 festgelegten Rückholfeder 4 gegen seine (gezeichnete) Ausgangslage drängbar. Der Bolzen 2 bildet eine Schwenkachse I. Um diese Schwenkachse I dreht sich auch eine Mitnehmer-Nase 40 des Handbremshebels 1, deren Bedeutung später erläutert wird. Außerdem ist am Handbremshebel 1 eine Ratschenklinke 5 gelagert, die gewöhnlich in eine Verzahnung 6 eingreift, welche bogenförmig an der Rastplatte 3 angeordnet ist. Mittels eines im Handbremshebel 1 federnd gelagerten, in die Ratschenklinke 5 eingehängten Stiftes 7 kann die Ratschenklinke 5 gelöst werden.

Auf dem gleichen Bolzen 2 sind, wie auch der Handbremshebel 1, vorn und hinten zwei deckungsgleiche Mitnehmerplatten 8 gelagert, die mit einer Öse 9 zum Einhängen eines Seilzuges 10 versehen sind.

Die Mitnehmerplatte 8 weist zwei Rasten 11 und 12 auf, in die ein Rasthebel 13 mit einem Zahn 14 eingreifen kann. Der Rasthebel 13 hat an seinem dem Zahn 14 gegenüberliegenden Ende einen nach außen ragenden Hebel 15, der zwei weiteren Hebeln 16 benachbart ist, die an zwei ebenfalls deckungsgleichen Schwenkplatten 17 angeformt sind. Ein die Platten 17 und 8 durchdringender Stift 18 bildet für die Schwenkplatten 17 eine Drehstelle mit einer Schwenkachse II. Rasthebel 13 und Schwenkplatten 17 sind durch eine Drehfeder 19 und einen Lagerstift 20 miteinander gekuppelt. An ihrem den Hebeln 16 gegenüberliegenden Enden 21 tragen die Schwenkplatten 17 je einen Mitnehmer 22, die an seitlichen Führungen einer Gewindemutter 23 anliegen sowie die jeweilige Mitnehmerplatte 8 durchdringen.

Die Gewindemutter 23 sitzt auf einer Drehspindel 24, die über ein Getriebe 25 mit einer Welle eines Elektromotors 26 gekuppelt ist. Die Spindel 24 wird an ihrem freien Ende von einem Lager 27 aufgenommen, das in einem Grundkörper 28 befestigt ist, der auch die Rastplatte 3 und eine Durchführung 29 für den Seilzug 10 trägt.

Der Seilzug 10 führt zu einer Radbremse 30 und dient zu deren Betätigung. In der Radbremse 30 ist ein Sensor 31 zum Ermitteln der jeweils zum Feststellen des Fahrzeugs notwendigen

Bremsbetätigungskraft vorgesehen. Signale des Sensors 31 werden in einer Elektronik 32 zum Ein- und Ausschalten des Elektromotors 26 ausgewertet.

An die Elektronik 32 sind zwei Schalter 33 und 34 angeschlossen, die über Kontakte 35 und 36 betätigt werden. Der eine Kontakt 35 berührt den Zahn 14 des Rasthebels 13, wenn er in die Raste 11 der Mitnehmerplatte 8 eingerastet ist, und der andere Kontakt 36 wird von einem Stift 37 in der Endstellung der Gewindemutter 23 betätigt.

Die beschriebene Feststellbremse arbeitet wie folgt:

### Automatikbetrieb:

Mit Hilfe eines nicht dargestellten Schalters wird der Elektromotor 26 eingeschaltet. Die Drehspindel 24 dreht sich. Über die Längsbewegung der Gewindemutter 23 wird durch die Mitnehmerplatten 8 der Seilzug 10 betätigt und Bremskraft erzeugt. Der Kraftschluß erfolgt bei Anlage der Mitnehmer 22 an der Gewindemutter 23. Die für den notwendigen Bremszug erforderliche Kraft wid von dem Sensor 31 abgefragt. Das sich daraus ergebende Signal wird von der Elektronik 32 für die Regelung des Elektromotors 26 verwendet. Der Rasthebel 13 muß für diesen Betriebszustand in der Raste 11 der Mitnehmerplatte 8 stehen. Der Handbremshebel 1 hat keine Funktion.

### Servobetrieb:

Um ein konventionelles Handbremsen zu simulieren, kann mit einem elektrischen Schalter, der sich an geeigneter Stelle befindet, von Automatik- auf Servobetrieb umgestellt werden. Der Rasthebel 13 bleibt auch für diesen Betriebszustand in der Raste 11. Jetzt kann mit dem Handbremshebel 1 über ein nicht dargestelltes Potentiometer, das bei dem Bolzen 2 befestigt ist, der Bremsvorgang eingeleitet werden. Dabei wird die Seilzugkraft mittels des Potentiometers und des Sensors 31 über die Elektronik 32 geregelt.

### Mechanischer Hilfsbetrieb:

Sollte durch einen Defekt der Elektronik 32 oder des Motors 26 kein elektrisches Handbremsen mehr möglich sein, kann mit Umstellen des Rasthebels 13 in die andere Raste 12 ein mechanischer Hilfsbetrieb erreicht werden. Beim Umstellen werden die Mitnehmer 22 mittels der Schwenkplatte 17 aus dem Anlagebereich der Gewindemutter 23 gebracht. Somit ist der gesamte elektrische Bereich von dem Bremsvorgang abgekoppelt. Durch Anlagen der Mitnehmer 22 an die MitnehmerNasen 40 des Handbremshebels 1 wird ein mechanisches Bremsen, wie herkömmlich bekannt, durchgeführt.

Vorteil der Erfindung ist die elektrisch geregelte Bremsung, die z.B. das Anfahren am Berg mit Einhandlenken unnötig macht, sowie das automatische Anziehen der Handbremse beim Parken, das ein unbeabsichtigtes Wegrollen des Fahrzeuges verhindert. Durch Verwendung des Sensors 31 wird der Seilzug 10 beim Servobetrieb nicht übermäßig verspannt.

## Patentansprüche

1. Servounterstützte Feststellbremse für Fahrzeuge, mit einem die Bremse (30) betätigenden Seilzug (10) oder dgl., in den eine mechanische Handkraft und eine durch einen Elektromotor (26) erzeugte Servokraft parallel zueinander mittels eines Hebelgestänges (8, 13, 17) einleitbar sind, das wenigstens eine schwenkbare, mit dem Seilzug (10) verbundene Mitnehmerplatte (8) aufweist, die sowohl vom Elektromotor (26) als auch bei Ausfall der Servokraft von einem Handbremshebel (1) im Bremssinn betätigbar ist, gekennzeichnet durch die Merkmale:
- es ist eine vom Elektromotor (26) antreibbare Drehspindel (24) mit einer unverdrebbar längsgeführten Gewindemutter (23) vorgesehen,
- an der wenigstens einen Mitnehmerplatte (8) ist wenigstens eine Schwenkplatte (17) mit einem Mitnehmer (22) angeordnet, welcher in einer Stellung der Schwenkplatte (17) eine Verbindung der Mitnehmerplatte (8) nur mit der Gewindemutter (23) herstellt und in einer anderen Stellung unter Trennung dieser Verbindung eine Verbindung mit dem Handbremshebel (1) erzeugt.

2. Feststellbremse nach Anspruch 1, dadurch gekennzeichnet, daß der Handbremshebel (1) und die wenigstens eine Mitnehmerplatte (8) eine gemeinsame Schwenkachse (I, 2) haben und daß die Bewegungsbahn der Gewindemutter (23) zwischen dieser Schwenkachse (I, 2) und dem Angriffsort des Seilzuges (10) an der Mitnehmerplatte (8) verläuft.

3. Feststellbremse nach Anspruch 2, dadurch gekennzeichnet, daß die Schwenkachse (II, 18) der wenigstens einen Schwenkplatte (17) an der wenigstens einen Mitnehmerplatte (8) mit Abstand zu deren Schwenkachse (I, 2) im Bereich der Bewegungsbahn der Gewindemutter (23) liegt.

4. Feststellbremse nach Anspruch 1 oder 3, dadurch gekennzeichnet, daß die wenigstens eine Schwenkplatte (17) in ihren zwei Stellungen durch einen handbetätigbaren Rasthebel (13) an der Mitnehmerplatte (8) einrastbar ist.

5. Feststellbremse nach Anspruch 1, dadurch gekennzeichnet, daß zwei Mitnehmerplatten (8) und zwei Schwenkplatten (17) deckungsgleich zu beiden Seiten der Gewindemutter (23) angeordnet sind.

6. Feststellbremse nach Anspruch 1, dadurch gekennzeichnet, daß bei mit der Gewindemutter (23) verbundener Mitnehmerplatte (8) der Elektromotor (26) mit einem vom Handbremshebel (1) betätigbaren Potentiometer steuerbar ist.

7. Feststellbremse nach Anspruch 1, dadurch gekennzeichnet, daß innerhalb der über den Seilzug (10) betätigbaren Radbremse ein Sensor (31) zum Ermitteln der notwendigen Bremsbetätigungskraft angeordnet ist und daß Signale des Sensors (31) zum Schalten des Elektromotors (26) vorzugsweise in einer Elektronik (32) auswertbar sind.

## Claims

1. Power-assisted parking brake for vehicles, having a Bowden cable (10) or the like which actuates the brake (30) and to which a manual mechanical force and a power-assistance force produced by an electric motor (26) can be applied parallel to one another by means of a lever linkage (8, 13, 17) which has at least one pivotable driver plate (8) which is connected to the Bowden cable (10) and can be actuated to bring about braking both by the electric motor (26) and, in the event of the power-assistance force failing, by a handbrake lever (1), characterized by the features:
- a rotary spindle (24) which can be driven by the electric motor (26) is provided with a captively longitudinally guided threaded nut (23),
- at least one pivot plate (17) is arranged on the at least one driver plate (8) and has a driver (22) which in one position of the pivot plate (17) produces a connection between the driver plate (8) and the threaded nut (23) only, and in another position while disconnecting this connection produces a connection with the handbrake lever (1).

2. Parking brake according to Claim 1, characterized in that the handbrake lever (1) and the at least one driver plate (8) have a common pivot axis (I, 2), and in that the movement path of the threaded nut (23) runs between this pivot axis (I, 2) and the location at which the Bowden cable (10) acts on the driver plate (8).

3. Parking brake according to Claim 2, characterized in that the pivot axis (II, 18) of the at least one pivot plate (17) lies on the at least one driver plate (8) at a distance from its pivot axis (I, 2) in the region of the movement path of the threaded nut (23).

4. Parking brake according to Claim 1 or 3, characterized in that the at least one pivot plate (17) can be locked in its two positions by a manually actuated locking lever (13) on the driver plate (8).

5. Parking brake according to Claim 1, characterized in that two driver plates (8) and two pivot plates (17) are arranged congruently on both sides of the threaded nut (23).

6. Parking brake according to Claim 1, characterized in that when the driver plate (8) is connected to the threaded nut (23) the electric motor (26) can be controlled with a potentiometer which can be actuated by the handbrake lever (1).

7. Parking brake according to Claim 1, characterized in that a sensor (31) for determining the necessary brake actuation force is arranged within the wheel brake which can be actuated by means of the Bowden cable (10), and in that signals of the sensor (31) for switching on the electric motor (26) can preferably be evaluated in an electronic device (32).

## Revendications

1. Frein de stationnement assisté pour véhicule comprenant un câble de traction (10) ou moyen analogue actionnant le frein 30, et qui reçoit une force manuelle, mécanique et une force assistée créée par un moteur électrique (26), en parallèle, par l'intermédiaire d'une tringlerie à levier (8, 13, 17), comprenant au moins une plaque d'entraînement (8) reliée au câble de traction (10), cette plaque pouvant être actionnée dans le sens du freinage à la fois par le moteur électrique (26) et en cas de défaillance de la force assistée, par un levier de frein à main (1), caractérisé en ce que :
- il comporte une broche rotative (24) entraînée par le moteur électrique (26) et portant un écrou (23) bloqué en rotation et guidé en translation,
- sur au moins une plaque d'entraînement (8) il est prévu au moins une plaque pivotante (17) munie d'un organe d'entraînement (22) qui établit dans une position de la plaque pivotante (17), une liaison de la plaque d'entraînement (8) avec l'écrou (23) et dans l'autre position ouvre cette liaison et réalise une liaison avec le levier de frein à main (1).

2. Frein de stationnement selon la revendication 1, caractérisé en ce que le levier de frein à main (1) ait au moins une plaque d'entraînement (8) entre un axe de pivotement (I, II) commun et la trajectoire de l'écrou (23) est comprise entre cet axe de pivotement (I, II) et le point d'attaque du câble de traction (10) sur la plaque d'entraînement (8).

3. Frein de stationnement selon la revendication 2, caractérisé en ce que l'axe de pivotement (II, 18) d'au moins une plaque pivotante (17) est prévu/e sur au moins une plaque d'entraînement (8) à une certaine distance de l'axe de pivotement (I, 2) dans la zone de la trajectoire de l'écrou (23).

4. Frein de stationnement selon la revendication 1 ou 3, caractérisé en ce qu'au moins une plaque pivotante (17) peut s'accrocher à la plaque d'entraînement (8) dans ses deux positions par un levier à cran (13) à commande manuelle.

5. Frein de stationnement selon la revendication 1, caractérisé par deux plaques d'entraînement (8) et deux plaques pivotantes (17), identiques, prévues de part et d'autre de l'écrou (23).

6. Frein de stationnement selon la revendication 1, caractérisé en ce que lorsque la plaque d'entraînement (8) est reliée à l'écrou (23), le moteur électrique (26) est commandé par un potentiomètre actionné par le levier de frein à main (1).

7. Frein de stationnement selon la revendication 1, caractérisé par un capteur (31) équipant le frein de roue actionné par le câble de traction (10) pour déterminer la force nécessaire à la commande du frein et les signaux du capteur (31) sont exploités de préférence dans un circuit électronique (32) pour commuter le moteur électrique (26).
